# EUROPEAN PATENT APPLICATION

(11) **EP 4 530 371 A1**
(43) Date of publication of application: **02.04.2025**
(21) Application number: 23382987.8
(22) Date of filing: 28.09.2023
(51) Int. Cl.: C23C 18/16, B33Y 80/00, C23C 18/20, C23C 18/22, C23C 18/24, C23C 18/40

(54) **A PLATING METHOD FOR A POLYMERIC SUBSTRATE WITHOUT USING PALLADIUM**

(71) Applicant: Acondicionamiento Tarrasense, 08225 Terrassa (Barcelona) (ES)
(72) Inventor: MESEGUER GUALLAR, Antonio, 08225 Terrassa (Barcelona) (ES); CALVET MOLINAS, Martí, 08225 Terrassa (Barcelona) (ES); DOMÈNECH CASTELLS, Anna, 08225 Terrassa (Barcelona) (ES); VILARÓ BATLLE, Sergi, 08225 Terrassa (Barcelona) (ES); ROCA I CODINA, Pol, 08225 Terrassa (Barcelona) (ES); FACCINI, Mirko, 08225 Terrassa (Barcelona) (ES); BAUTISTA, Lorenzo, 08225 Terrassa (Barcelona) (ES); AMANTIA, David, 08225 Terrassa (Barcelona) (ES); AUBOUY, Laurent, 08225 Terrassa (Barcelona) (ES)
(74) Representative: Herrero & Asociados, S.L.

(57) **Abstract**

The present invention relates to a plating method for polymer substrates. The polymer substrates are obtained by additive manufacturing and then are coating by a metal layer. The metallized polymer pieces have properties such as abrasion resistance and electric conductivity, features that are not typical of polymeric pieces. The method avoids the use of palladium.

## Description

### FIELD OF THE INVENTION

The present invention relates to a plating method for polymer substrates. The polymer substrates are obtained by additive manufacturing and then are coating by a metal layer. The metallized polymer pieces have properties such as abrasion resistance and electric conductivity, features that are not typical of polymeric pieces. The method avoids the use of palladium.

### BACKGROUND OF THE INVENTION

Polymers are relevant engineering materials, in industrial applications are used for their many advantages, such as ease of shaping, low density, good mechanical strength, and low cost of processing. The plating of polymer pieces can improve these features.

Over the past several years, there have been improvements in technologies for 3D printing, known more generally as additive manufacturing. The use of 3D printing provides several benefits in comparison to traditional manufacturing methods, most notably greater design freedom, allowing the fabrication of complex architectures.

It is possible to combine the high spatial resolution of 3D printed polymers with the functional properties of a metal surface. The ability to metallize three-dimensional architectures opens several possibilities towards developing unique multifunctional materials.

Some methods have been described for selectively depositing Pd metal on the surface of polymers. For example, the patent WO99/39021 describes a process for coating a thermotropic liquid crystalline polymer with palladium, comprising, coating a surface of said liquid crystalline polymer with palladium by sputtering or ion-plating. However, the high cost of palladium forces its replacement with cheaper metals.

It is necessary the development of new method for plating the polymer substrates obtained by additive manufacturing, which show intricate shapes and without the use of palladium.

### SUMMARY OF THE INVENTION

The current invention solves the afore mentioned problems by disclosing a plating method wherein the metal is copper and comprises different steps.

The invention refers to the metallization of plastic elements produced using 3D printing technology. The parameters of the metallization method have been deeply investigated.

The adhesion and durability of the metal plate are greatly influenced by the condition of the polymeric surface. The polymer surfaces must be treated in some way to accept a chemical plating of copper. Adhesion of the copper to the plastic surface is very important.

The use of noble metals is known in plating method which comprises steps of etching, activating and metallizing a polymer substrate. In the present invention the plating of the polymer substrate is obtained without the use of noble metals, as it is known that are excellent catalytic capacity but very high cost, also with the present invention can be avoid dangerous chemicals like chromium that usually is used with the palladium.

Therefore, the first aspect of the invention is a plating method for polymer substrates comprises the step of:
a) cleaning a polymer substrate;
b) etching the polymer substrate after the cleaning step a) wherein the etching step is carried out by introducing the polymer substrate in an acid solution or by applying vacuum plasma or by introducing the polymer substrate in a fluor compound aqueous solution;
c) introducing the polymer substrate after step b) in a copper salt alcoholic solution and,
d) after step c) introducing the polymer substrate in a reducing aqueous solution and;
e) after step d) introducing the polymer substrate in a metallization bath comprising a copper salt aqueous solution.

The step c) is the step of activation previous to the reducing step d) and is one of the relevant steps because of its direct effect on the quality of plating substrate. In this step the polymer is introduced in a copper salt alcoholic solution. The term "alcoholic solution" as used refers to a solution of a chemical compound in an alcohol, in particular, an alcohol of formula HOR, wherein R is unsubstituted (C₁-C₄) alkyl. As it is showed in the comparative example 2 if the solution is not and alcoholic solution but an aqueous solution is not obtained the plating.

The term "fluoride compound" includes any compound which comprises at least one fluorine atom.

The term "copper salts" means in the context of the present specification any water-soluble compounds of fluor that are capable of liberating fluor ions upon hydrolysis.

The metallization bath of step e) comprises a soluble ion of copper, a reducing agent and such other ligands, salts and additives that are required to obtain a stable bath having the desired plating rate, deposit morphology and other characteristics.

### DETAILED DESCRIPTION OF THE INVENTION

As has been said the first aspect of the invention is a plating method for polymer substrates comprises the step of:
a) cleaning a polymer substrate;
b) etching the polymer substrate after the cleaning step a) wherein the etching step is carried out by introducing the polymer substrate in an acid solution or by applying vacuum plasma or by introducing the polymer substrate in a fluor salt aqueous solution;
c) introducing the polymer substrate after step b) in a copper salt alcoholic solution and,
d) after step c) introducing the polymer substrate in a reducing agent aqueous solution and;
e) after step d) introducing the polymer substrate in a metallization bath comprising a copper salt aqueous solution.

Preferably the polymer substrate is obtained by additive manufacturing. Additive manufacturing permits to make of complex workpieces with intricate internal structures. The additive manufacturing is the process of creating an object by building it one layer at a time. In a more preferent embodiment the polymer substrates is obtained by multi jet fusion. Multi Jet Fusion (MJF) is one of the additive manufacturing (AM) technologies, a Powder Bed Fusion (PBF) technology that uses a heat source but does not use a laser rather, it employs an infrared energy.

The material of the polymer substrates is preferably selected from polycarbonate (PC), polyamide PA11, polyamide PA12 and polyamide 12 glass bead (PA12GB). Both polyamide PA11 and polyamide PA12 offer strong resistance to chemicals, excellent resolution. The polyamide 12 glass bead (PA12GB) produces functional parts with fine detail and dimensional accuracy and is UV resistant and provides dimensional stability and repeatability. Therefore, in a preferent embodiment the polymer substrates are made from PA11, PA12 and PA12GB

Preferably the step a) of cleaning is carried out with an alkaline detergent. More preferably is carried out at a temperature range from 40°C to 90°C. The step a) preferably is accomplished during a time range from 5 min to 40 min.

Preferably, the acids solution in the step b) are selected from hydrochloric, hydrofluoric, nitric or sulfuric aqueous solution. Particularly in the step b) the acid solution is H₂SO_{4aq}.

Preferably when the step b) is carried out by introducing the polymer substrate in an acid solution the temperature is from 30°C to 60°C. More preferably the time is from 5 min to 40 min.

Preferably when the etching step b) is carried out by introducing the polymer substrate in a fluor salt aqueous solution, the temperature is from 40°C to 90°C. More preferably the time is from 5 min to 40 min.

Preferably, fluoride compounds are selected from: tetramethyl ammonium fluoride ((CH₃)₄NF), ammonium fluoride (NH₄F), hydrogen fluoride (HF), fluorinated salts such as calcium fluoride, ammonium fluoride, aluminum fluoride, sodium fluoride, potassium fluoride, magnesium fluoride, silicon hexafluoride (H₂SiF₆), zirconium hexafluoride (H₂ZrF₆), potassium zirconium hexafluoride (K₂ZrF₆) and titanium hexafluoride (H₂TiF₆) and ammonium bifluoride, i.e., ammonium hydrogen bifluoride (NH₄HF₂), and combinations thereof. Particularly the fluoride compound is ammonium hydrogen bifluoride (NH₄HF₂).

Preferably when the etching step c) is carried out by applying vacuum plasma, the flow is comprised from 5 sccm (1ml per minute) to 50 sccm and the power is from 10Wto 400W. More preferably the time is prom 5 min to 20 min.

Preferably the step c) is carried out at a temperature between 30°C and 70°C. More preferably from 5 min to 35 min. Preferably, the copper salt alcoholic solution is a copper salt in ethanol. Particularly the salt is copper (II) acetate.

Preferably the alcohol is selected from: methanol, ethanol, propanol and butanol.

Preferably the reducing agent are selected from formaldehyde, paraformaldehyde, hydrazine, amine boranes, alkali metal borohydrides, alkali metal. Particularly the reducing agent is sodium borohydride. Preferably the temperature of step d) is in a range from 25°C to 55°C. Preferably the time in step d) is from 1 to 20 min.

Preferably the step e) is carried out at a temperature from 20°C to 30°C. More preferably the time in step e) is from 5 to 80 min.

Preferably the metallization bath comprising a copper salt aqueous solution, NaC₄H₄O₆, CH₂O, NaOH, K₄Fe(CN)₆.

### Examples

The following examples are merely illustrative of this invention and must not be interpreted in a sense that is limiting thereof.

### Example 1

A polymer substrate obtained by Multi Jet Fusion (MJF) was subjected to the steps described in Table 1.

**Table 1. Steps of the Example 1 of the invention**

| Steps | Description | Time (min) | Temperature (°C) |
|---|---|---|---|
| 1 | Alkaline industrial cleaner | 15 | 55 |
| 2 | 366 g/L H₂SO₄ | 20 | 55 |
| 3 | 5g/L copper acetate ethanolic solution | 30 | 80 |
| 4 | 0.378g/L NaBH₄ | 2 | 40 |
| 5 | Metallization bath | 45 | Room temperature |
| | 1.8 g/L CuSO₄ | | |
| | 25 g/L NaC₄H₄O₆ | | |
| | 10 g/L CH₂O | | |
| | 5 g/L NaOH | | |
| | 2 g/L K₄Fe(CN)₆ | | |

The result of applying the steps described in Table 1 to the polymeric substrate results in the piece being covered with a layer of copper. A conductive and functional layer is obtained, allowing the possibility of following the deposition of other metallic layers through electrodeposition.

### Example 2. Comparative examples

In this comparative example was showed that the different steps and feature are essential.

First the same step and in the same order was carried out but the step 2 was achieved with 400g/L KOH and not with H₂SO₄. Under these conditions, metallization was not achieved.

Second the same step and in the same order was carried out but the step 2 was eliminated. Under these conditions, metallization was not achieved. This showed that the reduction step is essential.

Third, finally, metallization was carried out following the same steps as those shown in Table 1, but step three was enhanced with an aqueous solution. Please see Table 2.

**Table 2. Steps of the third comparative example of the invention**

| Steps | Description | Time (min) | Temperature (°C) |
|---|---|---|---|
| 1 | Alkaline industrial cleaner | 15 | 55 |
| 2 | 366 g/L H₂SO₄ | 20 | 55 |
| 3 | 5g/L copper acetate aqueous solution | 30 | 80 |
| 4 | 0.378g/L NaBH₄ | 2 | 40 |
| 5 | Metallization bath | 45 | Room temperature |
| | 1.8 g/L CuSO₄ | | |
| | 25 g/L NaC₄H₄O₆ | | |
| | 10 g/L CH₂O | | |
| | 5 g/L NaOH | | |
| | 2 g/L K₄Fe(CN)₆ | | |

If the step 3 of surface activation is carried out in a aqueous solution the plating is not possible.

## Claims

1. A plating method for polymer substrates comprises the step of:
a) cleaning a polymer substrate;
b) etching the polymer substrate after the cleaning step a) wherein the etching step is carried out by introducing the polymer substrate in an acid solution or by applying vacuum plasma or by introducing the polymer substrate in a fluor compound aqueous solution;
c) introducing the polymer substrate after step b) in a copper salt alcoholic solution and,
d) after step c) introducing the polymer substrate in a reducing aqueous solution and;
e) after step d) introducing the polymer substrate in a metallization bath comprising a copper salt aqueous solution.

2. The plating method according claim 1 wherein the polymer substrate is obtained by additive manufacturing.

3. The plating method according one of the claims 1 to 2 wherein the material of the polymer substrates is preferably selected from: polyamide PA11, polyamide PA12 and polyamide 12 glass bead (PA12GB).

4. The plating method according one of the claims 1 to 3 wherein the step a) of cleaning is carried out with an alkaline detergent at a temperature range from 40°C to 90°C.

5. The plating method according one of the claims 1 to 4 wherein the acids solution in the step b) are selected from hydrochloric, hydrofluoric, nitric or sulfuric aqueous solution.

6. The plating method according one of the claims 1 to 5 wherein the step b) is carried out by introducing the polymer substrate in an acid solution at a temperature is from 30°C to 60°C.

7. The plating method according one of the claims 1 to 5 wherein the etching step b) is carried out by introducing the polymer substrate in a fluor salt aqueous solution at a temperature is from 40°C to 90°C.

8. The plating method according one of the claims 1 to 7 wherein the copper salt alcoholic solution is a copper salt in an alcohol of formula HOR, wherein R is unsubstituted (C₁-C₄) alkyl.

9. The plating method according one of the claims 1 to 8 wherein in the step d) the reducing agent is sodium borohydride.

10. The plating method according one of the claims 1 to 9 wherein the step e) is carried out at a temperature from 20°C to 30°C.
